(19) Europäisches Patentamt

European Patent Office

Office européen des brevets

(11) Numéro de publication : **0 119 181**
**B1**

(12) # FASCICULE DE BREVET EUROPÉEN

(45) Date de publication du fascicule du brevet :
09.09.87

(51) Int. Cl.⁴ : **A 01 G 25/02**

(21) Numéro de dépôt : **84870024.1**

(22) Date de dépôt : **20.02.84**

(54) Distributeur ou goutteur pour la micro-irrigation de sols.

(30) Priorité : 22.02.83 BE 210175

(43) Date de publication de la demande :
19.09.84 Bulletin 84/38

(45) Mention de la délivrance du brevet :
09.09.87 Bulletin 87/37

(84) Etats contractants désignés :
AT BE CH DE FR GB IT LI LU NL SE

(56) Documents cités :
FR-A- 2 348 528
US-A- 4 059 228

(73) Titulaire : Smeyers, Pierre A.
143, avenue J.F. Debecker
B-1200 Bruxelles (BE)

Nakachian, Raymond J.
Medina Road, kilo 10 P.O. Box 7911
Jeddah (SA)

(72) Inventeur : Smeyers, Pierre A.
Avenue J.F. Debecker, 143
B-1200 Bruxelles (BE)

(74) Mandataire : De Brabanter, Maurice et al
Bureau VANDER HAEGHEN 63 Avenue de la Toison
d'Or
B-1060 Bruxelles (BE)

Jouve, 18, rue St-Denis, 75001 Paris, France

## Description

La présente invention est relative à un distributeur ou goutteur pour la micro-irrigation de sols comprenant :

une enveloppe présentant un orifice d'alimentation (à relier à une conduite d'un liquide d'irrigation sous pression) et un orifice d'évacuation de ce liquide ;

un corps obturateur de révolution qui présente une partie conique ou tronconique, qui est contenu dans l'enveloppe susdite et qui est déplaçable sous l'action du mouvement du liquide d'irrigation dans cette enveloppe entre un siège formé dans l'enveloppe et proche de l'orifice d'alimentation et un siège formé dans l'enveloppe et proche de l'orifice d'évacuation, ce dernier siège ayant une forme tronconique et étant coaxial à la partie conique ou tronconique du corps obturateur ;

un passage annulaire qui est délimité par les faces opposées l'une à l'autre de l'enveloppe et du corps obturateur et qui s'étend de l'orifice d'alimentation à l'orifice d'évacuation de l'enveloppe, ce passage annulaire permettant le rinçage du goutteur ou distributeur pendant le déplacement dans l'enveloppe précitée du corps obturateur du siège proche de l'orifice d'évacuation vers le siège proche de l'orifice d'alimentation et vice-versa, ainsi que

des moyens de rappel du corps obturateur sur son siège proche de l'orifice d'alimentation, lorsque la pression dudit liquide d'irrigation tombe en dessous d'une valeur prédéterminée.

La micro-irrigation est une méthode connue qui permet, à l'aide de distributeurs placés en des endroits prédéterminés d'une surface cultivée et reliés à un système de distribution d'eau sous pression, d'effectuer des apports continus ou périodiques d'eau d'irrigation éventuellement additionnée d'engrais ou de produits phytopharmaceutiques aux endroits susdits, de façon que de l'eau d'irrigation soit seulement amenée aux zones de développement radiculaire de semences ou de plantes, là où celles-ci exigent sa présence.

Il est connu d'utiliser, en micro-irrigation, des distributeurs de liquide en goutte-à-goutte ou micro-jet et en particulier des goutteurs à circuit long comportant des conduits éventuellement capillaires, rectilignes ou hélicoïdaux ou encore en forme de spirales ou à chicanes ou des goutteurs à circuit court présentant un orifice simple ou double, ces goutteurs étant éventuellement auto-régulants, c'est-à-dire aptes à débiter des quantités constantes de liquide, en dépit de variations de la pression de l'eau dans le système de distribution d'eau.

Ces goutteurs connus peuvent être montés soit en dérivation sur une rampe d'amenée d'eau, soit en ligne dans la rampe elle-même ou dans une conduite.

On connaît un goutteur particulier du type à circuit court comprenant une chambre qui présente un orifice d'alimentation et un orifice d'évacuation, entre lesquels un obturateur, constitué par exemple par une bille, peut se déplacer sous l'action d'un courant de liquide produit dans la chambre par une variation de la pression à laquelle le liquide est soumis. En position normale, le goutteur monté en dérivation sur une rampe distributrice de liquide, est placé verticalement, l'orifice d'évacuation étant au point le plus haut, en sorte que, en l'absence d'arrivée de liquide par l'orifice d'alimentation, l'obturateur repose par gravité sur un siège inférieur formé autour de cet orifice d'alimentation.

Lorsque la rampe distributrice est mise sous pression, de l'eau arrive avec force par l'orifice d'alimentation et chasse l'obturateur de son siège inférieur. L'obturateur entraîné par le flux de l'eau vient alors obturer l'orifice d'évacuation en s'appliquant sur un siège supérieur formé autour de cet orifice d'évacuation. Un ou plusieurs canaux ménagés dans le siège supérieur permettent un écoulement goutte-à-goutte de l'eau pendant que l'obturateur est appliqué contre le siège supérieur susdit.

Pendant la durée du déplacement de l'obturateur d'un siège à l'autre, une fraction d'eau sous pression peut s'échapper par l'orifice d'évacuation, de manière à rincer et à nettoyer le siège de celui-ci, ainsi que le ou les canaux permettant l'écoulement goutte-à-goutte de l'eau. Lors de la mise hors service de la rampe distributrice par fermeture d'un robinet ou d'une vanne interrompant l'admission d'eau sous pression dans cette rampe, la pression d'eau devient nulle dans la chambre du goutteur et l'obturateur vient, par gravité, reprendre sa place sur le siège de l'orifice d'alimentation. Ce type de goutteur a l'inconvénient de ne pas pouvoir être placé dans n'importe quelle position, étant donné qu'il ne fonctionne, comme on l'a signalé plus haut, que lorsqu'il est placé verticalement.

On a remédié à cet inconvénient dans un autre goutteur particulier connu en substituant à l'obturateur en forme de bille une sorte de corps de soupape maintenu sur l'orifice d'alimentation par un ressort, la pression de ce dernier étant inférieure à la pression de l'eau lorsqu'elle alimente la rampe distributrice.

Les deux goutteurs connus décrits ci-dessus du type à circuit court ont l'inconvénient d'être sujets à une obstruction pendant la période d'irrigation.

On connaît aussi par le document US-A-4 059 228, un goutteur auto-régulateur du type décrit dans le premier paragraphe du présent mémoire dans lequel le corps obturateur, cylindrique dans certaines formes de réalisation, tronconique dans d'autres, doit combattre les effets d'une contre-pression pour obturer l'orifice d'évacuation. De plus, la partie de l'obturateur servant de guide et de piston présente l'inconvénient de retenir les impuretés en amont de l'enveloppe ou du boîtier de l'obturateur. Lors de la fermeture de la source d'alimentation en liquide des conduits d'alimentation des goutteurs, le corps obturateur ne ferme jamais complètement l'orifice d'alimentation, en sorte que les goutteurs, en position de fermeture, laissent échapper toute l'eau contenue dans les conduits qui les alimentent, ce qui constitue une perte d'eau importante et un inconvénient. Cet inconvénient est d'autant plus grave que, dans les régions désertiques, la perte de la moindre quantité d'eau est intolérable.

Les goutteurs décrits dans le document US-A-4 059 228 doivent en outre être montés dans un système comportant une filtration complexe, au même titre que les goutteurs connus évoqués plus haut.

Or, même si l'eau ou le liquide d'irrigation est soumis à une filtration sur des filtres retenant des particules relativement fines, le danger d'obstruction des goutteurs reste important. De ce fait, les utilisateurs potentiels de goutteurs hésitent à utiliser des goutteurs, car lorsque ceux-ci sont bouchés, ils deviennent souvent inutilisables et doivent être remplacés ou nettoyés.

La présente invention vise à remédier à ces inconvénients.

Elle a pour objet un distributeur ou goutteur fiable à long terme, c'est-à-dire particulièrement apte à fonctionner correctement pendant des périodes prolongées sans obstruction ou bouchage.

L'invention a encore pour objet un goutteur ou distributeur à microjet du type auto-filtrant, c'est-à-dire équipé de moyens retenant les particules de dimensions prédéterminées pendant son fonctionnement, de manière telle que ces particules sont incapables de boucher ce goutteur.

L'invention a aussi pour objet un goutteur agencé de manière à nettoyer le filtre qu'il contient, en évacuant les particules retenues par ce filtre, ce nettoyage s'effectuant pendant le déplacement du corps obturateur entre ses positions d'ouverture et de fermeture et vice-versa.

L'invention a également pour objet un goutteur qui maintient plein d'eau ou de liquide d'irrigation le conduit qui l'alimente, lorsque le goutteur est hors service, ce goutteur étant agencé pour empêcher la vidange du conduit d'alimentation lorsque le corps obturateur obture l'orifice d'alimentation du goutteur.

Enfin, l'invention a encore pour objet un goutteur agencé pour empêcher tout reflux d'eau éventuellement chargée d'impuretés par aspiration de cette eau dans le conduit d'alimentation du goutteur, sous l'effet d'une dépression créée par une différence de niveau entre le goutteur et une partie de son conduit d'alimentation.

Suivant la présente invention, le distributeur ou goutteur selon le premier paragraphe du présent mémoire est essentiellement caractérisé en ce qu'il est muni, dans l'une desdites faces opposées délimitant le passage annulaire précité d'une série circulaire d'échancrures capables de laisser passer le liquide d'irrigation, tout en retenant des particules de granulométrie déterminée présentes dans ce liquide, pendant que la partie conique ou tronconique du corps obturateur est appliquée sur le siège tronconique proche de l'orifice d'évacuation de l'enveloppe.

Les échancrures susdites qui peuvent présenter la forme d'encoches en forme de V ou de U ou la forme de fentes peuvent, conformément à l'invention, être soit ménagées périphériquement dans la partie de plus grand diamètre du corps obturateur, soit prévues dans le bord d'une ouverture circulaire ménagée dans une membrane appliquée sur le siège proche de l'orifice d'évacuation de l'enveloppe susdite, soit encore prévues dans une lèvre périphérique d'un rebord annulaire d'une membrane portée par le corps obturateur, ce rebord étant situé au voisinage de la partie de plus grand diamètre de la partie conique ou tronconique du corps obturateur.

Selon une particularité. importante de l'invention, le corps obturateur ou la membrane susdite, qui peut être avantageusement réalisé, au moins en partie, en une matière élastiquement déformable, présente, en aval des échancrures susdites, une rainure formant un canal continu dont le profil est tel qu'il impose au liquide qui le parcourt de nombreux changements de direction et dont l'une des extrémités s'ouvre vers l'orifice d'évacuation. La rainure susdite peut aussi être ménagée dans le siège proche de l'orifice d'évacuation.

Le corps obturateur est avantageusement de forme tronconique et a sa grande base située du côté de l'orifice d'alimentation, tandis que le siège proche de l'orifice d'évacuation est également de forme tronconique, l'angle au sommet du cône générateur de ce siège d'évacuation étant égal à l'angle au sommet du corps obturateur tronconique, ce dernier étant, de préférence, muni, dans sa partie de plus grand diamètre, d'une lèvre déformable dans la partie périphérique de laquelle se trouvent les échancrures précitées séparées entre elles par des dents.

Dans une autre forme de réalisation du goutteur suivant l'invention, dans laquelle est utilisée la membrane précitée, celle-ci est de forme tronconique et est appliquée en permanence sur le siège tronconique proche de l'orifice d'évacuation de l'enveloppe, cette membrane présentant dans sa partie de plus grand diamètre un trou circulaire, dont le bord présente les échancrures susdites séparées par des dents.

Le corps obturateur est muni d'un appendice guidé dans un fourreau prévu dans l'enveloppe susdite en aval de l'orifice d'alimentation de la chambre susdite, des ailettes sensiblement radiales ou hélicoïdales étant prévues sur au moins une partie de la hauteur de l'appendice qui est, de préférence, coiffé d'une tête conique.

Les moyens de rappel du corps obturateur vers son siège proche de l'orifice d'alimentation peuvent, suivant l'invention, être constitués soit par un aimant agissant sur une matière ferromagnétique, soit par des bras élastiques radiaux qui font office de ressort et qui sont solidaires par une extrémité du corps obturateur, tandis que leurs extrémités libres prennent appui dans un logement circulaire ménagé dans l'enveloppe du goutteur, les bras élastiques radiaux sollicitant en permanence le corps obturateur vers le siège proche de l'orifice d'alimentation, en empêchant l'écoulement de liquide à travers le goutteur, tant que la pression de ce liquide est inférieure à un seuil prédéterminé par l'élasticité des bras radiaux.

D'autres particularités et détails de l'invention ressortiront de la description détaillée suivante des dessins schématiques annexés au présent mémoire, qui représentent, uniquement à titre d'exemples, cinq formes de réalisation d'un goutteur suivant l'invention.

Dans ces dessins :

les figures 1, 2 et 3 sont des coupes transversales d'une première forme de réalisation d'un goutteur montrant le corps obturateur dans trois positions distinctes ;

la figure 4 est une vue en perspective montrant une forme du corps obturateur d'un goutteur suivant l'invention ;

la figure 5 est, à plus grande échelle, une vue d'une partie, entourée d'une circonférence, à la figure 2 ;

la figure 6 est, à plus grande échelle, une vue, telle que celle de la figure 5, d'une partie, entourée d'une circonférence, à la figure 3 ;

la figure 7 est une coupe transversale d'une deuxième forme de réalisation d'un goutteur suivant l'invention ;

la figure 8 est une vue en perspective éclatée du goutteur schématisé à la figure 7 ;

les figures 9 à 12 sont des coupes transversales d'une troisième forme de réalisation d'un goutteur suivant l'invention montrant le corps obturateur dans quatre positions distinctes ;

la figure 13 est une vue en plan par dessous de la partie inférieure du corps obturateur ;

la figure 14 est une vue en perspective éclatée de la troisième forme de réalisation, schématisée aux figures 9 à 12, du goutteur suivant l'invention ;

la figure 15 est une coupe transversale d'une quatrième forme de réalisation d'un goutteur suivant l'invention ;

la figure 16 est une vue en perspective éclatée du goutteur montré à la figure 15, et

la figure 17 est une coupe transversale d'une cinquième forme de réalisation du goutteur suivant l'invention.

Dans ces différentes figures, les mêmes notations de référence désignent des éléments identiques ou analogues.

Les goutteurs illustrés sur les dessins comportent essentiellement trois pièces désignées respectivement par les notations de référence 1, 2 et 3, ces pièces 1 à 3 étant assemblées par clipsage, bien qu'elles puissent être assemblées par d'autres moyens, par exemple par vissage, voire même par soudage.

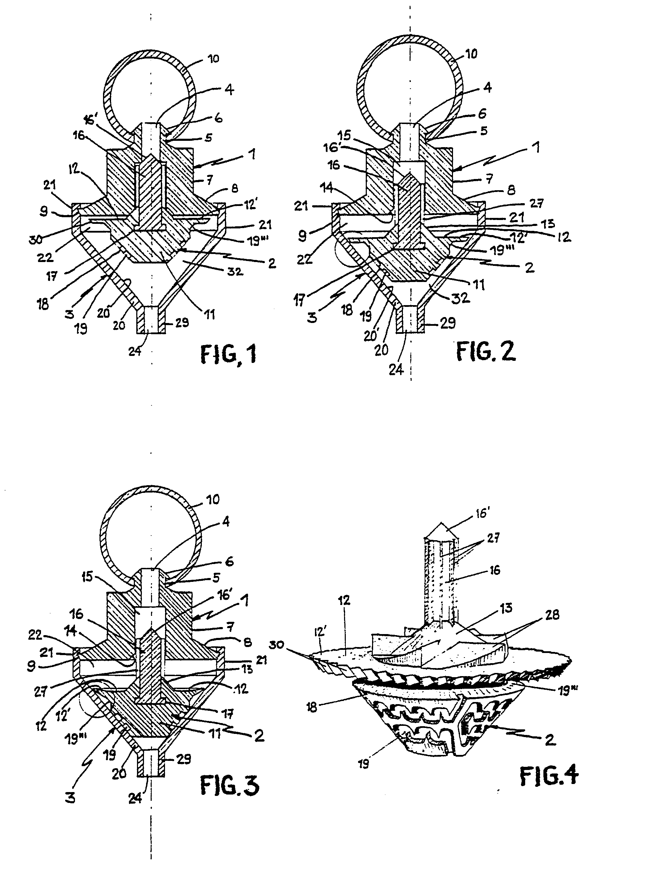

La pièce 1 constituant un couvercle, percée d'un orifice d'alimentation 4, comprend un collet 5 à extrémité biseautée en 6 et un corps cylindrique 7, faisant office de fourreau, solidaire du collet 5, ce fourreau 7 présentant à son extrémité opposée au collet 5, un rebord périphérique 8 dont le bord libre 9 est biseauté aux figures 1 à 3.

La pièce 1 est accrochée par l'extrémité biseautée 6 de son collet 5 à un orifice ménagé dans une rampe ou conduite distributrice 10 elle-même raccordée à une source d'alimentation (non montrée) en liquide d'irrigation sous pression, une vanne ou un robinet (non représenté) permettant d'interrompre l'alimentation en liquide.

Dans une première forme de réalisation, faisant l'objet des figures 1 à 6, le corps cylindrique 7 de la pièce 1 qui est, de préférence, en matière plastique, est aimanté, c'est-à-dire que des particules aimantées y sont dispersées, en sorte que ce corps 7 forme un aimant permanent. Au lieu d'un aimant permanent, on pourrait éventuellement faire usage d'un électro-aimant.

La pièce 2 qui constitue le corps obturateur du goutteur comprend un corps de révolution 11 en matière plastique élastiquement déformable, par exemple en matière plastique à base de silicone ou en polytétrafluoréthylène. Dans la forme de réalisation représentée aux figures 1 à 6, le corps de révolution 11 se présente sensiblement sous la forme d'un tronc de cône dont la grande base 12 est dirigée vers l'orifice d'alimentation 4 de la pièce 1.

La base 12 du corps de révolution sensiblement conique 11 présente une saillie tronconique centrale 13 destinée à venir s'appliquer sur une extrémité biseautée 14 d'un alésage 15 ménagé dans le corps 7, l'extrémité biseautée 14 constituant le siège de l'orifice d'alimentation 4, 15 de la pièce 1.

Au corps de révolution tronconique obturateur 11 est connecté un appendice cylindrique 16 en une matière magnétique ou sensible à un champ magnétique, ou en une matière contenant des particules ferromagnétiques. L'appendice 16 est engagé dans l'alésage 15 du fourreau 7 de la pièce 1, de façon à être soumis à la force d'attraction exercée en permanence par ce corps aimanté 7. Une extrémité pourvue d'un rebord périphérique 17 de l'appendice 16 est noyée dans le corps de révolution tronconique obturateur 11.

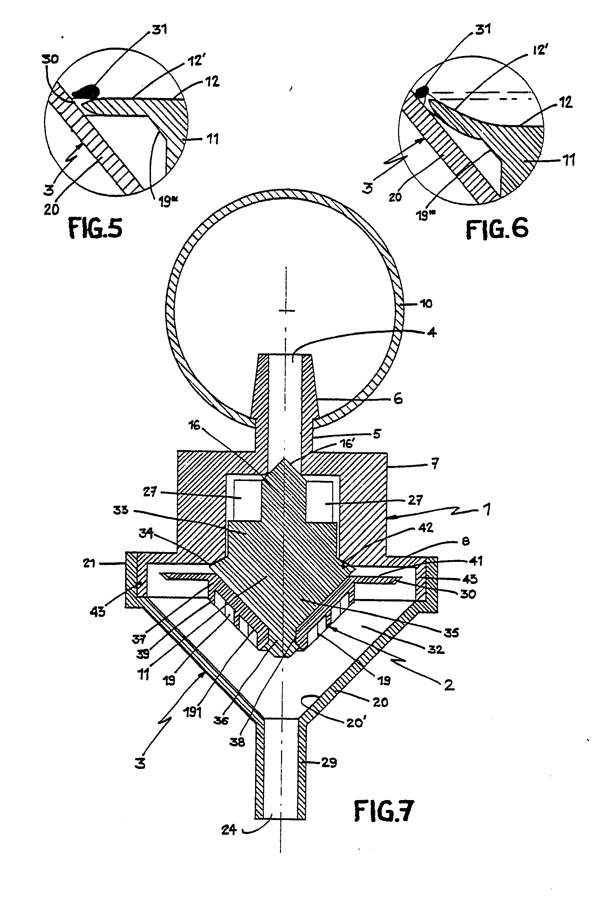

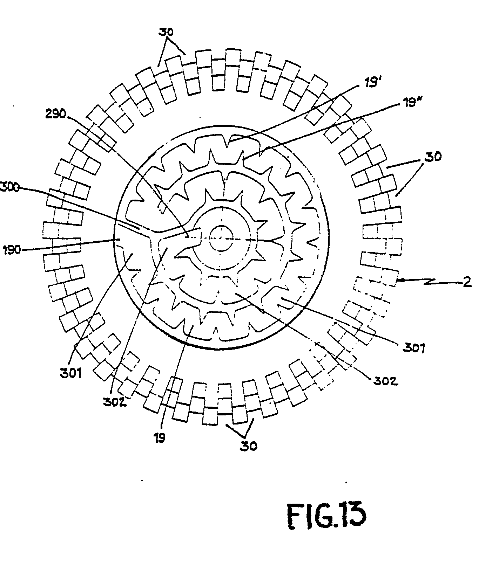

Le corps de révolution tronconique obturateur 11 présente sur sa surface latérale 18 une rainure 19 d'allure sinueuse, que l'on aperçoit en perspective à la figure 4 et en vue en plan par dessous à la figure 13. Cette rainure forme un canal continu qui impose à l'eau qui le parcourt de nombreux changements de direction, du fait de son cours sinueux donnant lieu à des rebroussements tels que 19', 19", comme on le voit le mieux à la figure 13. La rainure 19 possède une entrée 190 au voisinage de la grande base du tronc de cône et une sortie 290 au voisinage de sa petite base. Dans la forme de réalisation représentée à la figure 13, la rainure 19 présente un point de changement de sens marqué par une cloison 300, si bien que la rainure se compose de deux branches 301, 302, suivant des cours parallèles, reliées l'une à l'autre le long de la paroi 300. Dans la forme de réalisation représentée à la figure 4, la rainure est pratiquée dans le corps 11 en la creusant perpendiculairement à la surface latérale 18 de ce corps, mais il est préférable de la réaliser comme montré aux figures 7 à 12 et 15, où le fond 191 du canal est orienté vers la base 12 du tronc de cône, l'axe de la section transversale de la rainure étant parallèle à l'axe du corps obturateur.

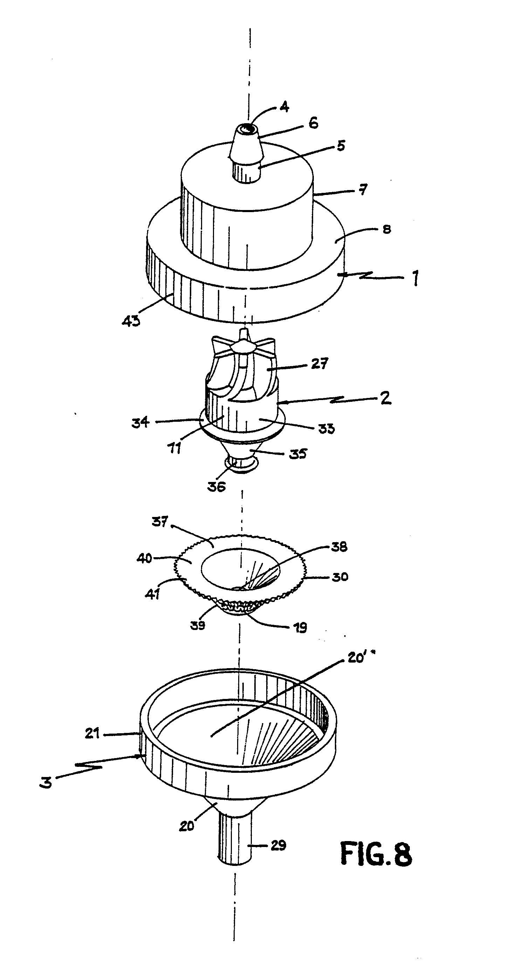

Une partie essentielle du corps obturateur 11 est constituée par le bord de la grande base 12 de ce corps tronconique 11. Ce bord se présente sous la forme d'une lèvre 12' dans laquelle se trouvent entaillées des échancrures 30, que l'on aperçoit également sur la figure 8. La lèvre 12' est de préférence déformable et avantageusement souple. En dessous de la lèvre 12', le corps obturateur 11 présente une gorge périphérique 19''' constituant une chambre réservoir communiquant avec la rainure sinueuse 19.

Dans la forme de réalisation, représentée à la figure 4, du corps obturateur 11, celui-ci comporte en outre, entre sa saillie tronconique centrale 13 et sa base 12 que termine la lèvre 12', un ensemble de surfaces inclinées 28 constituant des pales. La saillie 13 surmontée par l'appendice 16 comporte sur son pourtour des ailettes radiales 27 et est coiffée d'une tête conique 16'. Le rôle des éléments 27 et 28 sera exposé plus loin.

La partie désignée dans son ensemble par la notation de référence 3 constitue l'enveloppe de l'obturateur. Elle comporte, reliés les uns aux autres, un bord supérieur cylindrique 21 formant intérieurement une chambre 22, une partie tronconique creuse 20 formant le siège proche de l'orifice d'évacuation du goutteur et une partie cylindrique terminale 29 dans laquelle est ménagé l'orifice d'évacuation 24.

Le corps obturateur tronconique 11 est logé à l'intérieur de l'enveloppe 20 et, dans sa position inférieure, il s'applique par sa surface latérale 18, sur la surface latérale intérieure 20' (formant le siège proche de l'orifice d'évacuation 24) de la partie 20 de l'enveloppe 3.

Pour expliquer le fonctionnement de l'appareil, tel que décrit dans cette première forme de réalisation, on se reportera aux figures 1 à 6.

Dans un premier état, dans lequel il ne règne pas de pression d'eau dans la conduite 10, le corps obturateur 11 est rappelé sur son siège 14 par l'attraction exercée par le fourreau aimanté 7 sur l'appendice 16 de ce corps obturateur 11. L'orifice d'alimentation 4, 15 est fermé et il ne peut donc s'écouler aucun liquide d'irrigation (que l'on suppose être de l'eau par exemple) par l'orifice 24.

Lorsqu'une pression est constituée dans la conduite 10 et qu'elle développe sur la tête supérieure 16' de l'appendice 16 une pression suffisante, la force de l'aimant est vaincue et le corps obturateur 11 se détache de son siège 14 pour se rapprocher de la partie inférieure de l'enveloppe. C'est la situation représentée à la figure 2. De l'eau s'écoule alors tout autour du corps obturateur 11, franchissant le bord de la lèvre 12 et passant à travers les échancrures 30,

en prenant un mouvement tourbillonnaire dans le passage 32 et le long des bords de la rainure formant le canal 19, puis s'échappant par l'orifice d'évacuation 24. Au cours de cette opération, l'eau balaie les particules, qui peuvent s'être déposées au cours d'une opération précédente dans la chambre 22 et sur la surface interne 20' de l'enveloppe 3.

Le corps obturateur 11, dont la lèvre périphérique 12' a un diamètre compris entre celui de la grande base et de la petite base de l'enveloppe tronconique, vient alors reposer par cette lèvre 12' contre le siège formé par la surface intérieure 20' de la partie 20 de l'enveloppe. C'est la situation représentée à la figure 3. Bien que la lèvre 12' se déforme, les échancrures 30 laissent encore passer de l'eau, mais arrêtent les particules trop grosses en suspension dans celle-ci, comme montré en 31 aux figures 5 et 6. C'est l'effet d'auto-filtration caractéristique du goutteur suivant l'invention. L'eau qui a traversé les échancrures 30 formant filtre et qui arrive maintenant dans le passage 32, pénètre dans la rainure 19 par son ouverture 190, la parcourt lentement et sort de cette rainure 19 par l'orifice 290, d'où elle gagne l'orifice d'évacuation 24, dont elle s'échappe goutte à goutte ou en microjet.

Les ailettes 27 et les pales 28 dont il a été question précédemment jouent leur rôle dans la phase de l'opération dans laquelle le corps obturateur 11 se trouve entre la position de fermeture représentée à la figure 1 et la position représentée à la figure 2. Les ailettes 28 qui fonctionnent à la façon des aubes d'une turbine font tourner le corps obturateur 11 tout entier autour de son axe de symétrie. Cette rotation a pour premier effet de modifier à chaque fois la position du corps 11 par rapport à la partie 20 de l'enveloppe. Une autre fonction assurée par ce mouvement de rotation est le raclage, par les ailettes 27, des parois intérieures du passage intérieur 15 du fourreau 7, pour en arracher d'éventuels dépôts.

Les figures 7 et 8 illustrent une deuxième forme de réalisation du goutteur suivant l'invention. Les parties de cette deuxième forme de réalisation, qui correspondent à des parties de la forme de réalisation déjà décrite en référence aux figures 1 à 6 sont désignées par les mêmes notations de référence. Aux figures 7 et 8, la partie 2 du goutteur est constituée par un corps obturateur 11 contenant des particules de matière ferromagnétique ou constitué en une matière ferromagnétique. Le corps obturateur 11 comprend une partie supérieure cylindrique 33 reliée par une partie intermédiaire tronconique 34 à une partie inférieure de forme conique ou en forme de tronc de cône renversé 35 se terminant par une saillie cylindrico-conique 36. A sa partie supérieure, le corps obturateur 11 présente un appendice 16 muni sur son pourtour d'ailettes hélicoïdales 27 et coiffé d'une tête conique 16'.

Le corps obturateur 11 est guidé par sa partie cylindrique 33 dans l'alésage 15 ménagée dans le corps cylindrique 7 constitué d'un aimant ou contenant des particules aimantées de la pièce 1 du goutteur. La tête 16' de l'appendice 16 permet d'assurer une étanchéité parfaite entre l'alésage et l'orifice d'alimentation 4, comme montré à la figure 7, lorsque le goutteur est fermé.

Sur la partie intérieure tronconique 35 est fixée par clipsage une membrane 37 en matière élastiquement déformable qui présente, comme on le voit en particulier à la figure 8, la forme d'une cuvette en forme de tronc de cône renversé présentant à son extrémité inférieure un trou 38 permettant de la fixer sur la saillie 36 du corps obturateur 11. La membrane 37 présente une paroi latérale 39 en forme de tronc de cône renversé, qui s'adapte sur la partie tronconique 35 du corps obturateur 11. A sa partie supérieure, la membrane 37 présente un rebord annulaire 40, dont le bord ou la lèvre périphérique 41 est muni d'échancrures de filtration 30. Dans la paroi latérale 39 de la membrane 37 est ménagée une rainure sinueuse 19 analogue à celle illustrée aux figures 4 et 13.

Le fonctionnement du goutteur illustré aux figures 7 et 8 est analogue à celui du goutteur montré aux figures 1 à 6, décrit plus haut. L'étanchéité du corps obturateur 11 par rapport à l'orifice d'alimentation 4 et au conduit 10 est assurée tant au niveau de la tête 16' de l'appendice 16 qu'au niveau de la partie intermédiaire tronconique 34 du corps obturateur 11, cette dernière étant appliquée sur un bord biseauté inférieur 42 de l'alésage 15 (ouverte à sa partie inférieure) du couvercle 1. Comme on le voit aux figures 7 et 8, le rebord périphérique 8 du couvercle 1 présente à sa périphérie une jupe 43 qui peut se fixer, par exemple par vissage, dans le rebord supérieur cylindrique 21 de l'enveloppe 3 du goutteur.

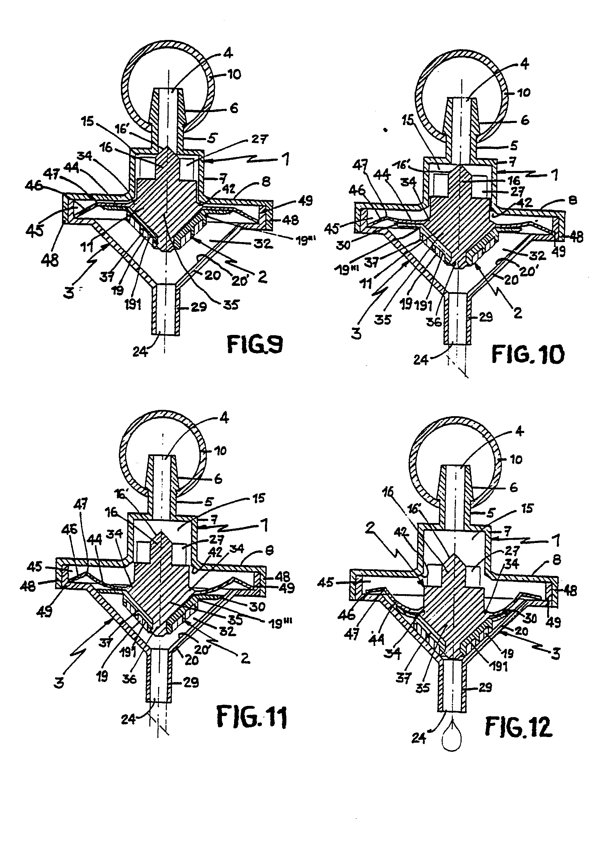

Les figures 9 à 12 et 14 représentent une troisième forme de réalisation du goutteur suivant l'invention. Les parties de cette troisième forme de réalisation, qui correspondent à des parties des formes de réalisation déjà décrites, portent les mêmes indices de référence que celles-ci, et ces parties ne seront pas décrites à nouveau. Dans la troisième forme de réalisation, l'appendice central 16 du corps obturateur n'est plus un corps aimanté ou aimantable, non plus que le fourreau 7 du couvercle 5, 7, 8. Les fonctions de rappel du corps obturateur 17 sur l'orifice d'alimentation 4 sont assurées autrement, comme cela sera décrit ci-après.

Le goutteur illustré aux figures 9 à 12 et 14 est semblable à celui montré aux figures 7 et 8, si ce n'est qu'il comporte un corps obturateur 11 non ferromagnétique ou dépourvu de particules ferromagnétiques, tandis que le couvercle 1 ne comporte pas d'aimant permanent. Les moyens de rappel du corps obturateur 11 vers la position fermée du goutteur (montrée à la figure 9) sont constitués par des bras radiaux élastiques 44, dont les extrémités libres prennent appui dans un logement annulaire 45 prévu à la partie supérieure de l'enveloppe 3 du goutteur.

Les bras radiaux élastiques 44 fixés aux parties 34, 35 du corps obturateur 11 sollicitent en permanence ce corps obturateur vers le siège proche de l'orifice d'alimentation 4, en empêchant l'écoulement de liquide à travers le goutteur, tant que la pression de ce liquide dans le conduit 10 est inférieure à un seuil prédéterminé par l'élasticité des bras radiaux 44.

Les bras élastiques radiaux 44 présentent, dans la position de fermeture du goutteur illustrée à la figure 9, une partie rectiligne sensiblement parallèle au rebord 8 et une partie terminale 46 qui est coudée en 47 vers le sommet ou la partie supérieure du corps obturateur tronconique, l'extrémité libre de ladite partie terminale 47 des bras 44 prenant appui dans le fond du logement 45 de la pièce 3.

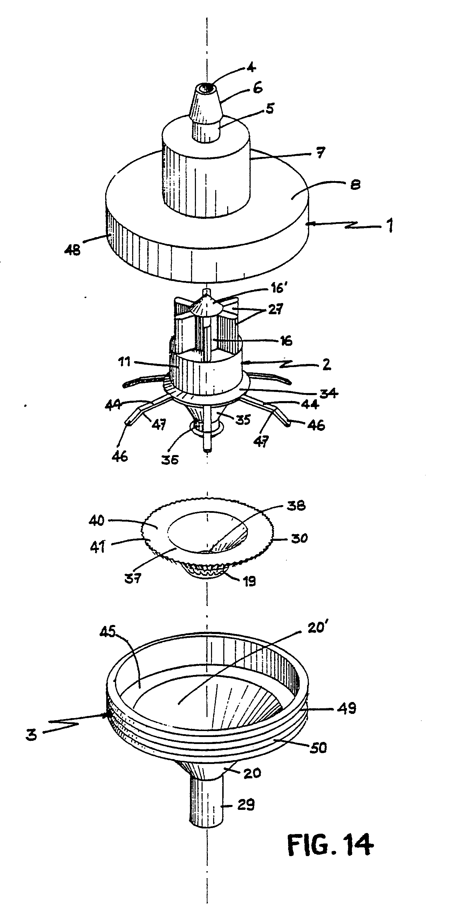

Dans la forme de réalisation du goutteur selon les figures 9 à 12 et 14, le couvercle 5, 7, 8 présente une jupe 48 dont la face intérieure est filetée et qui se visse sur un rebord cylindrique supérieur 49 solidaire de la paroi 20 de l'enveloppe 3, dont la face extérieure est filetée, comme montré en 50 à la figure 14.

Comme dans la deuxième forme de réalisation illustrée aux figures 7 et 8, le goutteur selon les figures 9 à 12 et 14 comporte une membrane tronconique 37 appliquée sur la face latérale de la partie en forme de tronc de cône renversé 35 du corps obturateur 11, cette membrane présentant des échancrures de filtration 30 sur la périphérie de son rebord 40, ainsi qu'une rainure sinueuse 19 dans sa face latérale tronconique extérieure.

La figure 9 montre le goutteur en position fermée, son corps obturateur 11 étant maintenu par les bras radiaux 44 contre les sièges proches de l'orifice d'alimentation 4. Les figures 10 et 11 montrent le goutteur en cours d'ouverture et la figure 12 montre le goutteur en position de service. Dans cette dernière, le corps obturateur 11 applique la membrane déformable 37 qu'il porte contre la face intérieure 20' de la paroi tronconique 20 de la partie ou enveloppe 3 du goutteur. Les figures 9 à 12 montrent les diverses positions que prennent le corps obturateur 11, les bras élastiques radiaux 44 et la membrane 37.

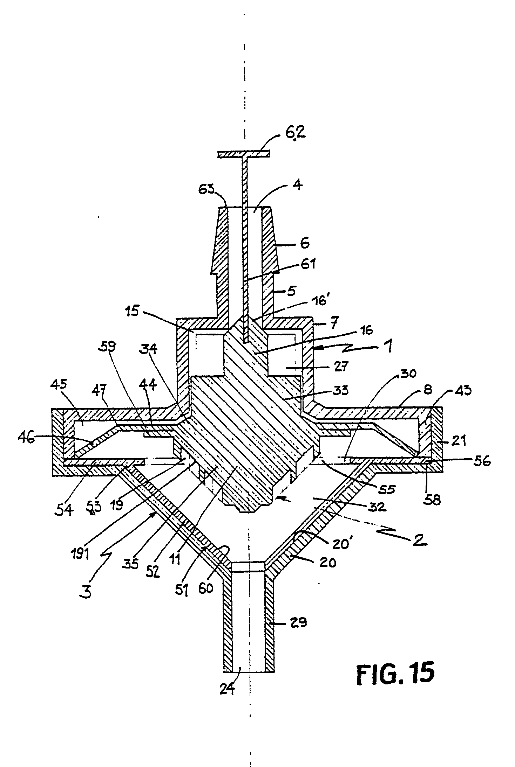

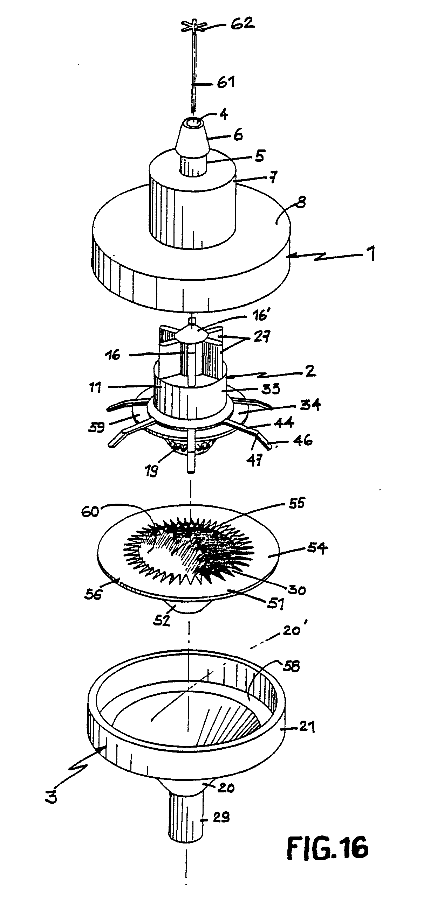

Les figures 15 et 16 montrent une quatrième forme de réalisation d'un goutteur suivant l'invention. Dans ces figures, des notations de référence identiques à celles des figures précédentes ont été utilisées pour désigner des éléments identiques ou similaires. Aux figures 15 et 16, on voit une membrane déformable en forme de cuvette désignée dans son ensemble par la notation de référence 51 et comprenant une partie 52 en forme de tronc de cône renversé creux, dont le bord supérieur 53 est solidaire d'un plateau 54, dans lequel est ménagé un trou circulaire central 55. Le bord de ce trou 55, dont le diamètre est inférieur à celui de la grande base de la partie 52 de la membrane 51, est pourvu d'échancrures de filtration 30. La membrane 51 est appliquée sur la face intérieure 20' de la paroi latérale 20 en forme de tronc de cône renversé de la partie de l'enveloppe 3 du goutteur. Le bord extérieur 56 du plateau 54 est inséré entre le bord inférieur 57 de la jupe 43 du couvercle 5, 7, 8 et le fond 58 du rebord cylindrique 21 solidaire de la paroi tronconique 20.

Comme on le voit à la figure 15, la partie du plateau 54, située à l'extérieur de la paroi tronconique 52 de la membrane 51, repose en permanence sur le fond 58 du rebord 21.

Le corps obturateur 11 est semblable à celui des figures 9 à 12 et 14, si ce n'est qu'il est muni d'une bague rigide 59 à hauteur de sa partie tronconique 34 intermédiaire entre sa partie cylindrique 33 et sa partie 35 en forme de cône renversé. Cette bague 59 sert à masquer partiellement les échancrures 30 prévues au bord du trou circulaire 55 ménagé dans le plateau 54 de la membrane lors de la mise en service du goutteur. Ainsi, les échancrures partiellement masquées par la bague 59 font office de filtre, le trou circulaire 55 du plateau 54 étant obturé par le corps obturateur 11.

La partie en forme de tronc de cône renversé 35 du corps obturateur rigide 11 présente sur sa face latérale une rainure sinueuse 19 analogue à celle montrée en particulier à la figure 13. Dans la position de service du goutteur, la face latérale rainurée de la partie tronconique 35 du corps obturateur est appliquée contre la face interne 60 de la partie tronconique 52 de la membrane déformable 51, de sorte que la rainure sinueuse 19 forme un conduit tortueux, par lequel le liquide filtré à travers les échancrures peut s'écouler, de façon à s'échapper goutte à goutte ou sous forme d'un microjet par l'orifice d'évacuation 24.

Comme on le voit encore aux figures 15 et 16, l'appendice 16 du corps obturateur porte une tige 61 qui s'étend axialement dans l'orifice d'alimentation 4 et porte à son extrémité libre un préfiltre 62 dont le diamètre est supérieur à celui dudit orifice d'alimentation 4. Dans la position hors service du goutteur, illustrée à la figure 15, le préfiltre 62 se trouve à une certaine distance de l'extrémité libre 63 de l'orifice d'alimentation 4. Par contre, lorsque le goutteur est dans la position de service, c'est-à-dire lorsque le corps obturateur 11 a été amené dans la position montrée aux figures 3 et 12, le préfiltre 62 est appliqué contre l'extrémité 63 de l'orifice d'alimentation 4 et filtre les grosses impuretés contenues dans le liquide envoyé sous pression dans le goutteur. Le préfiltre 62 peut être constitué d'un treillis ou de barreaux diamétraux permettant d'empêcher que de grosses particules ou des débris par exemple de nature végétale puissent pénétrer dans le goutteur.

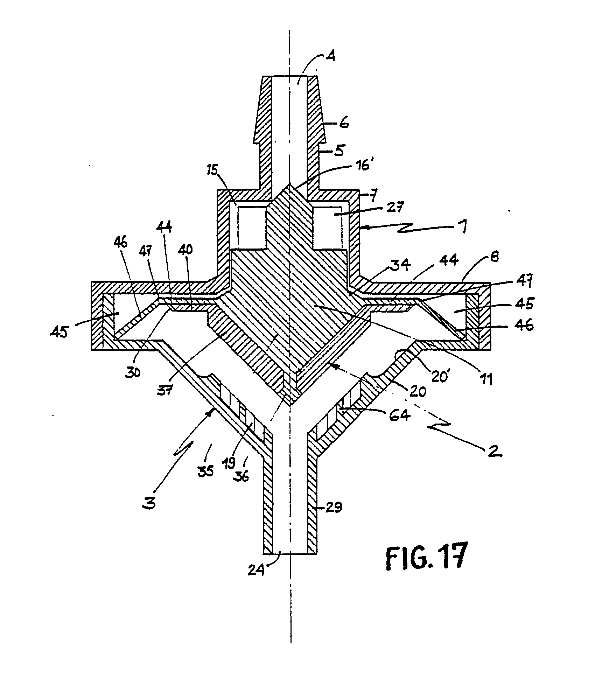

La figure 17 montre une cinquième forme de réalisation d'un goutteur suivant l'invention. Dans ce goutteur, analogue à celui montré aux figures 9 à 12 et 14, la membrane 37 présente, dans sa partie tronconique 39, une surface extérieure lisse vers le passage 32, tandis qu'une rainure sinueuse 19 est pratiquée dans une surépaisseur 64 de la paroi 20.

**Revendications**

1. Distributeur ou goutteur pour la micro-irrigation de sols comprenant :
une enveloppe (1, 3) présentant un orifice d'alimentation (4) (à relier à une conduite d'un liquide d'irrigation sous pression) et un orifice d'évacuation (24) de ce liquide ;
un corps obturateur de révolution (11) qui présente une partie conique ou tronconique (35), qui est contenu dans l'enveloppe susdite (1, 3) et qui est déplaçable sous l'action du mouvement du liquide d'irrigation dans cette enveloppe (1, 3) entre un siège (14) formé dans l'enveloppe (1, 3) et proche de l'orifice d'alimentation (4) et un siège (20') formé dans l'enveloppe (1, 3) et proche de l'orifice d'évacuation (24), ce dernier siège (20') ayant une forme tronconique et étant coaxial à la partie conique ou tronconique (35) du corps obturateur (11) ;
un passage annulaire (32) qui est délimité par les faces opposées l'une à l'autre de l'enveloppe (1, 3) et du corps obturateur (11) et qui s'étend de l'orifice d'alimentation (4) à l'orifice d'évacuation (24) de l'enveloppe, ce passage annulaire permettant le rinçage du goutteur ou distributeur pendant le déplacement dans l'enveloppe précitée (1, 3) du corps obturateur (11) du siège (20') proche de l'orifice d'évacuation (24) vers le siège (14) proche de l'orifice d'alimentation (4) et vice-versa, ainsi que des moyens (44) de rappel du corps obturateur (11) sur son siège (14) proche de l'orifice d'alimentation (4), lorsque la pression dudit liquide d'irrigation tombe en dessous d'une valeur prédéterminée, caractérisé en ce qu'il est muni, dans l'une desdites faces opposées délimitant le passage annulaire précité (32), d'une série circulaire d'échancrures (30) capables de laisser passer le liquide d'irrigation, tout en retenant des particules (31) de granulométrie déterminée présentes dans ce liquide, pendant que la partie conique ou tronconique (35) du corps obturateur est appliquée sur le siège tronconique (20') proche de l'orifice d'évacuation (24) de l'enveloppe (1, 3).

2. Goutteur suivant la revendication 1, caractérisé en ce que les échancrures susdites (30) sont ménagées périphériquement dans la partie de plus grand diamètre du corps obturateur (11) dans le passage annulaire précité (32).

3. Goutteur suivant la revendication 1, caractérisé en ce que les échancrures susdites (30) sont prévues dans le bord d'une ouverture circulaire (55) ménagée dans une membrane (51) appliquée sur le siège (20') proche de l'orifice d'évacuation (24) de l'enveloppe susdite (1, 3).

4. Goutteur suivant la revendication 1, caractérisé en ce que les échancrures susdites (30) sont prévues dans une lèvre périphérique (41) d'un rebord annulaire (40) d'une membrane (37) portée par le corps obturateur (11), ce rebord (40) étant situé au voisinage de la partie de plus grand diamètre de la partie conique ou tronconique (35) de ce corps obturateur (11).

5. Goutteur suivant l'une quelconque des revendications précédentes, caractérisé en ce que le corps obturateur (11) ou la membrane (51) appliquée sur le siège (20') proche de l'orifice d'évacuation (24) présente, en aval des échancrures susdites (30), une rainure (19) formant un canal continu dont le profil est tel qu'il impose au liquide qui le parcourt plusieurs changements de direction (19', 19") et dont l'une (190) des extrémités s'ouvre vers l'orifice d'alimentation (4), tandis que l'autre (290) s'ouvre vers l'orifice d'évacuation (24).

6. Goutteur suivant l'une quelconque des revendications 1 à 4, caractérisé en ce que le corps obturateur (11) présente une surface lisse destinée à s'appliquer sur le siège (20') proche de l'orifice d'évacuation (24) et en ce que ce siège (20') présente une rainure (19) formant un canal continu dont le profil est tel qu'il impose au liquide qui le parcourt plusieurs changements de direction (19', 19") et dont l'une (190) des extrémités s'ouvre vers l'orifice d'alimentation (4), tandis que l'autre (290) s'ouvre vers l'orifice d'évacuation (24).

7. Goutteur suivant l'une quelconque des revendications 5 et 6, caractérisé en ce que la rainure (19) susdite présente au moins un point de changement de sens (300), en sorte qu'elle se compose de branches (301, 302) sensiblement parallèles reliées l'une à l'autre en ce ou en ces point(s) (300).

8. Goutteur suivant l'une quelconque des revendications précédentes, caractérisé en ce que la grande base (12) de la partie conique ou tronconique (35) du corps obturateur (11) est située du côté de l'orifice d'alimentation (4).

9. Goutteur suivant la revendication 2 et l'une quelconque des revendications 5 à 8, caractérisé en ce que le corps obturateur (11) est muni dans sa partie de plus grand diamètre d'une lèvre déformable (12') dans la partie périphérique de laquelle se trouvent lesdites échancrures (30) séparées par des dents.

10. Goutteur suivant l'une quelconque des revendications précédentes, caractérisé en ce que le corps obturateur (11) comporte un appendice (16) guidé dans un fourreau (7) prévu dans l'enveloppe (3) susdite en aval de l'orifice d'alimentation (4) de la chambre susdite.

11. Goutteur suivant la revendication 10, caractérisé en ce que des ailettes (27) sont ménagées sur une partie au moins de la hauteur de l'appendice (16) du corps obturateur (11).

12. Goutteur suivant la revendication 11, caractérisé en ce que l'appendice (16) du corps obturateur (11) est de forme sensiblement cylindrique et en ce que ses ailettes (27) périphériques sont sensiblement radiales ou hélicoïdales.

13. Goutteur suivant les revendications 11 et 12, caractérisé en ce que l'appendice susdit (16) présente une forme cylindrique correspondant à la forme cylindrique dudit fourreau (7) sur une partie de sa hauteur à partir du corps obturateur (11) et est muni des ailettes susdites (27) sur le restant de sa hauteur.

14. Goutteur suivant l'une quelconque des revendications 10 à 13, caractérisé en ce que l'appendice (16) susdit est coiffé d'une tête conique ou tronconique (16') destinée à s'appliquer sur le siège proche de l'orifice d'alimentation (4), lorsque le corps obturateur (11) est dans sa position de fermeture.

15. Goutteur suivant l'une quelconque des revendications précédentes, caractérisé en ce que les moyens de rappel du corps obturateur (11) vers son siège proche de l'orifice d'alimentation (4) sont constitués, par un aimant permanent agissant sur une matière ferromagnétique.

16. Goutteur suivant la revendication 15, caractérisé en ce que le fourreau (7) susdit adjacent à l'orifice d'alimentation (4) contient un aimant ou des particules aimantées dispersées dans une matière inerte, tandis que le corps obturateur (11) et/ou son appendice (16) est, au moins en partie, en matière ferromagnétique.

17. Goutteur suivant l'une quelconque des revendications 1 à 14, caractérisé en ce que les moyens de rappel du corps obturateur (11) vers son siège proche de l'orifice d'alimentation (4) sont constitués par des bras élastiques radiaux (44) qui font office de ressort à déclic et qui sont solidaires, par une extrémité, du corps obturateur (11), tandis que leurs extrémités libres prennent appui dans un logement circulaire (45) ménagé dans l'enveloppe (3) du goutteur, les bras élastiques radiaux (44) sollicitant en permanence le corps obturateur (11) vers le siège proche de l'orifice d'alimentation (4), en empêchant l'écoulement de liquide à travers le goutteur, tant que la pression de ce liquide est inférieure à un seuil prédéterminé par l'élasticité des bras radiaux (44).

18. Goutteur suivant la revendication 17, caractérisé en ce que les bras radiaux (44) reliés au corps obturateur (11) comprennent une partie qui, dans la position de fermeture du goutteur, est rectiligne et sensiblement parallèle à la grande base (46) du corps obturateur (11), et une partie terminale (47) qui est coudée vers le sommet du corps obturateur tronconique (11) et par l'extrémité de laquelle les bras s'appuient dans le logement (45) susdit prévu dans l'enveloppe (3).

19. Goutteur suivant la revendication 15, caractérisé en ce que le corps obturateur (11) est muni de saillies (28) orientées de manière à faire subir à ce corps obturateur (11) un mouvement de rotation pendant son déplacement du siège proche de l'orifice d'alimentation (4) vers le siège (20') proche de l'orifice d'évacuation (24).

20. Goutteur suivant l'une quelconque des revendications précédentes, caractérisé en ce que l'enveloppe (3) est constituée d'une partie tronconique creuse (20) propre à recevoir le corps obturateur tronconique (11) et au centre de la petite base de laquelle se trouve l'orifice d'évacuation (24), ladite partie tronconique (20) étant prolongée au-delà de sa grande base par une partie cylindrique (21) munie d'un couvercle (1), ce couvercle (1) comprenant un plateau (8) de diamètre sensiblement égal à celui de ladite partie cylindrique (21) de l'enveloppe et étant surmonté d'un fourreau axial (7) terminé à son extrémité libre par une paroi au centre de laquelle est pratiqué l'orifice d'alimentation (4).

21. Goutteur suivant les revendications 6 à 8, caractérisé en ce que le corps obturateur (11) présente, entre sa grande base et sa petite base, en aval de la lèvre susdite (12'), une gorge périphérique (19''') constituant une chambre-réservoir communiquant avec la rainure (19) formant le canal continu précité.

22. Goutteur suivant l'une quelconque des revendications précédentes, caractérisé en ce qu'il comporte, en amont du corps obturateur (11), un préfiltre (62) appliqué, en position de service, sur l'orifice d'alimentation (4) du goutteur.

**Claims**

1. Distributor or dripper for the micro-irrigation of soils comprising :

a housing (1, 3) provided with an inlet (4) (to be connected to a conduit of an irrigation liquid under pressure) and with an outlet (24) of this liquid ;

a closing body of revolution (11) having a conical or frusto-conical part (35), which is contained in said housing (1, 3) and is movable under the influence of the movement of the irrigation liquid in said housing (1, 3) between a seat (14) formed in the housing (1, 3) and adjacent to the inlet (4) and a seat (20') formed in the housing (1, 3) and adjacent to the outlet (24), this last seat (20') having a frusto-conical form and being coaxial to the conical or frusto-conical part (35) of the closing body (11).

an annular passage (32) defined by the opposite faces of the housing (1, 3) and of the closing body (11) and extending from the inlet (4) to the outlet (24) of the housing, this annular passage allowing the rinsing of the dripper or distributor during the movement of the closing body (11), in said housing (1, 3) from the seat (20') adjacent to the outlet (24) toward the seat (14) adjacent to the inlet (4) and vice-versa, and means (44) for retracting the closing body (11) onto its seat (14) adjacent to the inlet (4), when the pressure of said irrigation liquid falls below a predetermined value ; characterized in that it comprises in one of the opposite faces defining said annular passage (32), a circular array of notches (30) which are capable of filtrating the irrigation liquid by retaining particles (31) of determined size contained in said liquid, while the conical or frusto-conical part (35) of the closing body is applied on the frustoconical seat (20') adjacent to the outlet (24) of the housing (1, 3).

2. Dripper according to claim 1, characterized in that said notches (30) are provided in the periphery of the part having the largest diameter of the closing body (11) in said annular passage (32).

3. Dripper according to claim 1, characterized in that said notches (30) are provided in the edge of a circular hole (55) provided in a membrane (51) applied on the seat (20') adjacent to the outlet (24) of said housing (1, 3).

4. Dripper according to claim 1, characterized in that said notches (30) are provided in a peripheral lip (41) of an annular flange (40) of a membrane (37) carried by the closing body (11), said flange (40) being located near the part having the largest diameter of the conical or frustoconical part (35) of this closing body (11).

5. Dripper according to anyone of the preceding claims, characterized in that the closing body (11) or the membrane (51) applied on the seat (20') adjacent to the outlet (24) is provided, downstream said notches (30), with a groove (19) which forms a continuous channel having such a profile that the liquid flowing therein is subjected to several direction changes (19', 19"), one end (190) of said groove having an opening directed toward the inlet (4), whereas the other (290) has an opening directed toward the outlet (24).

6. Dripper according to anyone of claims 1 to 4, characterized in that the closing body (11) has a smooth surface to ·be applied on the seat (20') adjacent to the outlet (24) and in that said seat (20') is provided with a groove (19) which forms a continuous channel having such a profile that the liquid flowing therein is subjected to several direction changes (19', 19"), one end (190) of said groove having an opening directed toward the inlet (4), whereas the other end (290) has an opening directed toward the outlet (24).

7. Dripper according to anyone of claims 5 and 6, characterized in that said groove (19) has at least one direction change point (300), so that it comprises sections which are substantially parallel to each other at that or these point(s) (300).

8. Dripper according to anyone of the preceding claims, characterized in that the large base (12) of the conical or frusto-conical part (35) of the closing body (11) is directed toward the inlet (4).

9. Dripper according to claim 2 and to anyone of claims 5 to 8, characterized in that the closing body (11) is provided in its part having the largest diameter with a flexible lip (12') having on its peripheral part said notches (30) separated by teeth.

10. Dripper according to anyone of the preceding claims, characterized in that the closing body (11) carries a shank (16) guided in a sheath (7) provided in said housing (3) downstream the inlet (4) of said housing.

11. Dripper according to claim 10, characterized in that fins (27) are provided on at least a part of the height of the shank (16) of the closing body (11).

12. Dripper according to claim 11, characterized in that the shank (16) of the closing body (11) has a substantially cylindrical shape and in that its peripheral fins (27) are substantially radial or helical.

13. Dripper according to claims 11 and 12, characterized in that said shank (16) has a cylindrical shape corresponding to the cylindrical shape of said sheath (7) on a part of its height from the closing body (11) and is provided with said fins (27) on the remaining part of its height.

14. Dripper according to any one of claims 10 to 13, characterized in that said shank (16) carries a conical or frusto-conical head (16') which is to be applied onto the seat adjacent to the inlet (4), when the closing body (11) is in its closed position.

15. Dripper according to anyone of the preceding claims, characterized in that the means for retracting the closing body (11) toward its seat adjacent to the inlet (4) consist of a permanent magnet acting on a ferro-magnetic material.

16. Dripper according to claim 15, characterized in that said sheath (7) adjacent to the inlet (4) contains a magnet or magnetized particles dispersed in an inert material, whereas the closing body (11) and/or its shank (16) is at least partially made of a ferro-magnetic material.

17. Dripper according to anyone of claims 1 to 14, characterized in that the means for retracting the closing body (11) toward its seat adjacent to the inlet (4) consist of radial elastic arms (44) which act as snapping springs and which are attached at one end to the closing body (11), whereas their free ends bear against a circular recess (45) provided in the housing (3) of the dripper, said radial elastic arms (44) urging permanently the closing body (11) toward the seat adjacent to the inlet (4) and inhibiting any liquid flow through the dripper, as long as the pressure of this liquid is less than a level predetermined by the elasticity of the radial arms (44).

18. Dripper according to claim 17, characterized in that the radial arms (44) connected to the closing body (11) comprise a part which, when the dripper is closed, is rectilinear and substantially parallel to the large base (46) of the closing body (11), and an end part (47) which is bent toward the top of the frusto-conical closing body (11) and which has an end by which the arms bear in said recess (45) provided in the housing (3).

19. Dripper according to claim 15, characterized in that the closing body (11) is provided with projections (28) which are oriented in such a way that they cause the closing body (11) to rotate during its displacement from the seat adjacent to the inlet (4) toward the seat (20') adjacent to the outlet (24).

20. Dripper according to anyone of the preceding claims, characterized in that the housing (3) comprises a hollow frusto-conical part (20) in which the frusto-conical closing body (11) is located and which has the outlet (24) in the central part of the small base thereof, said frusto-conical part (20) being extended, beyond its large base, by a cylindrical part (21) provided with a cover (1), comprising a flange (8), having a diameter which is substantially equal to the diameter of said cylindrical part (21) of the housing and bearing an axial sheath (7) which has, at its free end, a wall which is provided, in the central part thereof, with the inlet (4).

21. Dripper according to claims 6 to 8, characterized in that the closing body (1) is provided between its large base and its small base, downstream said lip (12') with a peripheral groove (19''') which forms a storage chamber connected to the groove (19) forming said continuous channel.

22. Dripper according to anyone of the preceding claims, characterized in that it comprises, upstream the closing body (11), a pre-filter (62) applied in the use position on the inlet (4) of the dripper.

**Patentansprüche**

1. Verteiler oder sprüher für die Mikroberieselung von Böden umfassend :

ein Gehäuse (1, 3), welches eine Einlaßöffnung (4) (zur Verbindung mit einer Leitung für eine Berieselungsflüssigkeit unter Druck) und eine Auslaßöffnung (24) für diese Flüssigkeit aufweist ;

einen drehbaren Verschlußkörper (11), der einen konischen oder kegelstumpfförmigen Teil (35) aufweist, in dem Gehäuse (1, 3) enthalten und unter der Wirkung der Bewegung der Berieselungsflüssigkeit in diesem Gehäuse (1, 3) zwischen einem in diesem Gehäuse (1, 3) ausgebildeten Sitz (14) in der Nähe der Einlaßöffnung (4) und einem in diesem Gehäuse (1, 3) ausgebildeten Sitz (20') nahe der Auslaßöffnung (24) verschiebbar ist, wobei letzterer Sitz (20') kegelstumpfförmige Gestalt hat und koaxial ist zum konischen bzw. kegelstumpfförmigen Teil (35) des Verschlußkörpers (11) ;

einen ringförmigen Durchlaß (32), der begrenzt ist durch die einander gegenüberliegenden Flächen des Gehäuses (1, 3) und des Verschlußkörpers (11) und der sich von der Einlaßöffnung (4) zur Auslaßöffnung (24) des Gehäuses erstreckt, wobei dieser ringförmige Durchlaß das Spülen des Sprühers oder Verteilers während der Verschiebung des Verschlußkörpers (11) im Gehäuse (1, 3) vom Sitz (20') in der Nähe der Auslaßöffnung (24) zum Sitz (14) in der Nähe der Einlaßöffnung (4) und umgekehrt gestattet, sowie

Mittel (44) zum zurückholen des Verschlußkörpers (11) auf seinen Sitz (14) in der Nähe der Einlaßöffnung (4), wenn der Druck der Berieselungsflüssigkeit unter einen vorbestimmten Wert absinkt, dadurch gekennzeichnet, daß der Verteiler oder Sprüher in einer der den ringförmigen Durchlaß (32) begrenzenden, gegenüberliegenden Flächen mit einer Kreisreihe von Ausnehmungen (30) versehen ist, die geeignet sind, die Berieselungsflüssigkeit durchströmen zu lassen, während sie Teilchen (31) einer bestimmten Korngröße, die in der Flüssigkeit vorhanden sind, zurückhalten, wenn der konische bzw. kegelstumpfförmige Teil (35) des Verschlußkörpers an dem kegelstumpfförmigen Sitz (20') in der Nähe der Auslaßöffnung (24) des Gehäuses (1, 3) anliegt.

2. Sprüher nach Anspruch 1, dadurch gekennzeichnet, daß die Ausnehmungen (30) peripher in dem Teil größeren Durchmessers des Verschlußkörpers (11) im ringförmigen Durchgang (32) angeordnet sind.

3. Sprüher nach Anspruch 1, dadurch gekennzeichnet, daß die Ausnehmungen (30) im Rand einer kreisförmigen Öffnung (55), die in einer auf dem Sitz (20') in der Nähe der Auslaßöffnung (24) des Gehäuses (1, 3) aufgebrachten Membran (51) vorgesehen ist, angeordnet sind.

4. Sprüher nach Anspruch 1, dadurch gekennzeichnet, daß die Ausnehmungen (30) in einer peripheren Lippe (41) eines ringförmigen Randes (40) einer Membran (37) vorgesehen sind, die vom Verschlußkörper (11) getragen ist, wobei sich der Rand (40) in der Nähe des Teiles des größeren Durchmessers des konischen bzw. kegelstumpfförmigen Teiles (35) des Verschlußkörpers (11) befindet.

5. Sprüher nach einem der vorhergehenden Ansprüche, dadurch gekennzeichnet, daß der Verschlußkörper (11) oder die auf dem Sitz (20') in der Nähe der Auslaßöffnung (24) anliegende Membran (51) stromabwärts der Ausnehmungen (30) eine Rinne (19) aufweist, die einen durchgehenden Kanal bildet, dessen Profil derart ist, daß auf die ihn durchströmende Flüssigkeit mehrere Richtungsänderungen (19', 19'') ausgeübt werden, und der ein Ende (190) aufweist, welches gegen die Einlaßöffnung (4) mündet, während sein anderes Ende (290) gegen die Auslaßöffnung (24) mündet.

6. Sprüher nach einem der Ansprüche 1 bis 4, dadurch gekennzeichnet, daß der Verschlußkörper (11) eine glatte Oberfläche aufweist, die dazu bestimmt ist, sich an den Sitz (20') in der Nähe der Auslaßöffnung (24) anzulegen, und daß dieser Sitz (20') eine Rinne (19) aufweist, die einen durchgehenden Kanal bildet, dessen Profil derart ist, daß auf die ihn durchströmende Flüssigkeit mehrere Richtungsänderungen (19', 19'') ausgeübt werden, und der ein Ende (190) aufweist, das gegen die Einlaßöffnung (4) mündet, während sein anderes Ende (290) gegen die Auslaßöffnung (24) mündet.

7. Sprüher nach einem der Ansprüche 5 und 6, dadurch gekennzeichnet, daß die Rinne (19) mindestens einen Richtungsänderungspunkt (300) derart aufweist, daß sie aus im wesentlichen parallelen Verzweigungen (301, 302) gebildet ist, die an diesem oder diesen Punkten (300) miteinander verbunden sind.

8. Sprüher nach einem der vorhergehenden Ansprüche, dadurch gekennzeichnet, daß die große Basis (12) des konischen bzw. kegelstumpfförmigen Teiles (35) des Verschlußkörpers sich auf der Seite der Einlaßöffnung (4) befindet.

9. Sprüher nach Anspruch 2 und einem der Ansprüche 5 bis 8, dadurch gekennzeichnet, daß der Verschlußkörper (11) in seinem Teil größeren Durchmessers mit einer verformbaren Lippe (12') versehen ist, in deren peripherem Teil sich die Ausnehmungen (30), getrennt durch zähne, befinden.

10. Sprüher nach einem der vorhergehenden Ansprüche, dadurch gekennzeichnet, daß der Verschlußkörper (11) einen Fortsatz (16) umfaßt, der in einer, im Gehäuse (3) stromabwärts der Einlaßöffnung (4) der Kammer vorgesehenen Hülse (7) geführt ist.

11. Sprüher nach Anspruch 10, dadurch gekennzeichnet, daß Flügel (27) zumindest über einen Teil der Höhe des Fortsatzes (16) des Verschlußkörpers (11) vorgesehen sind.

12. Sprüher nach Anspruch 11, dadurch gekennzeichnet, daß der Fortsatz (16) des Verschlußkörpers (11) im wesentlichen zylindrische Form aufweist und daß seine peripheren Flügel (27) im wesentlichen radial oder schraubenlinienförmig sind.

13. Sprüher nach den Ansprüchen 11 und 12, dadurch gekennzeichnet, daß der Fortsatz (16) über einen Teil seiner Höhe, ausgehend vom Verschlußkörper (11) zylindrische Form hat, die der zylindrischen Form der Hülse (7) entspricht und über den verbleibenden Teil seiner Höhe mit Flügeln (27) versehen ist.

14. Sprüher nach einem der Ansprüche 10 bis 13, dadurch gekennzeichnet, daß der Fortsatz (16) mit einem konischen oder kegelstumpfförmigen Kopf (16') bedeckt ist, der dazu bestimmt ist, sich auf den Sitz in der Nähe der Einlaßöffnung (4) anzulegen, während der Verschlußkörper (11) sich in geschlossener Position befindet.

15. Sprüher nach einem der vorhergehenden Ansprüche, dadurch gekennzeichnet, daß die Mittel zum Zurückholen des Verschlußkörpers (11) zu seinem Sitz in der Nähe der Einlaßöffnung (4) durch einen Permanentmagneten gebildet sind, der auf ein ferromagnetisches Material wirkt.

16. Sprüher nach Anspruch 15, dadurch gekennzeichnet, daß die Hülse (7) an der Einlaßöffnung (4) einen Magneten oder magnetisierte, in einem inerten Material verteilte Teilchen enthält, während der Verschlußkörper (11) und/oder sein Fortsatz (16) zumindest zum Teil aus ferromagnetischem Material besteht.

17. Sprüher nach einem der Ansprüche 1 bis 14, dadurch gekennzeichnet, daß die Mittel zum Zurückholen des Verschlußkörpers (11) zu seinem Sitz in der Nähe der Einlaßöffnung (4) durch radiale elastische Arme (44) gebildet sind, die als Ausklinkfedern wirken und die mit einem Ende mit dem Verschlußkörper (11) verbunden sind, während ihre freien Enden in einer ringförmigen Aufnahme (45), die im Gehäuse (3) des Sprühers vorgesehen ist, zur Anlage gelangen, wobei die radialen elastischen Arme (44) den Verschlußkörper (11) permanent gegen den Sitz in der Nähe der Einlaßöffnung (4) drücken und so das Strömen von Flüssigkeit durch den Sprüher verhindern, so lange der Druck der Flüssigkeit unter einem Wert liegt, der durch die Elastizität der radialen Arme (44) vorbestimmt ist.

18. Sprüher nach Anspruch 17, dadurch gekennzeichnet, daß die radialen Arme (44), die mit dem Verschlußkörper (11) verbunden sind, einen Teil, der in Verschlußposition des Sprühers geradlinig und im wesentlichen parallel zur großen Basis (46) des Verschlußkörpers (11) ist, und einen Endteil (47), der zur Spitze des kegelstumpfförmigen Verschlußkörpers (11) hin gekrümmt ist, umfassen, wobei die Arme mittels des Endes des Endteiles in der in dem Gehäuse (3) vorgesehenen Aufnahme (45) zur Anlage gelangen.

19. Sprüher nach Anspruch 15, dadurch gekennzeichnet, daß der Verschlußkörper (11) mit Vorsprüngen (28) versehen ist, die so ausgerichtet sind, daß sie dem Verschlußkörper (11) während seiner Verschiebung vom Sitz in der Nähe der Einlaßöffnung (4) zum Sitz (20') in der Nähe der Auslaßöffnung (24) eine Drehbewegung verleihen.

20. Sprüher nach einem der vorhergehenden Ansprüche, dadurch gekennzeichnet, daß das Gehäuse (3) aus einem kegelstumpfförmigen hohlen Teil (20) zur Aufnahme des kegelstumpfförmigen Verschlußkörpers (11) gebildet ist, wobei sich im Zentrum der kleinen Basis dieses Teiles die Auslaßöffnung (24) befindet, daß der kegelstumpfförmige Teil (20) über seine große Basis hinaus durch einen zylindrischen Teil (21) verlängert ist, der mit einem Deckel (1) versehen ist, welcher Deckel (1) eine Platte (8) von im wesentlichen gleichen Durchmesser wie jenem des zylindrischen Teils (21) des Gehäuses aufweist und von einer axialen Hülse (7) überragt wird, die an ihrem freien Ende durch eine Wand abgeschlossen ist, in deren Zentrum die Einlaßöffnung (4) ausgebildet ist.

21. Sprüher nach einem der Ansprüche 6 bis 8, dadurch gekennzeichnet, daß der Verschlußkörper (11) zwischen seiner großen Basis und seiner kleinen Basis, stromabwärts von der Lippe (12'), eine periphere Auskehlung (19''') aufweist, die eine mit der den durchgehenden Kanal bildenden Rinne (19) kommunizierende Reservoirkammer bildet.

22. Sprüher nach einem der vorhergehenden Ansprüche, dadurch gekennzeichnet, daß er stromaufwärts des Verschlußkörpers (11) einen Vorfilter (62) aufweist, der in Betriebsposition an der Einlaßöffnung (4) des Sprühers anliegt.

FIG. 1

FIG. 2

FIG. 3

FIG. 4

FIG.5

FIG.6

FIG.7

FIG.8

FIG.9

FIG.10

FIG.11

FIG.12

FIG.13

FIG. 14

FIG. 15

FIG.16

FIG. 17